# FASCICULE DE BREVET EUROPEEN

(11) **EP 2 566 724 B1**
(45) Date de publication et mention de la délivrance du brevet: **04.06.2014**
(21) Numéro de dépôt: 11730357.8
(22) Date de dépôt: 08.04.2011
(51) Int. Cl.: B60R 19/18

(54) **ENSEMBLE ARRIERE DE VEHICULE AUTOMOBILE**
HECKSTRUKTUR FÜR EIN KRAFTFAHRZEUG
MOTOR VEHICLE REAR ASSEMBLY

(30) Priorité: 05.05.2010 FR 1053511
(43) Date de publication de la demande: 13.03.2013
(73) Titulaire: Peugeot Citroën Automobiles SA, 78140 Vélizy Villacoublay (FR)
(72) Inventeur: VUILLEMIN, Roland, F-25340 Abbenans (FR)
(74) Mandataire: Fosse, Danièle
(86) Numéro de dépôt international: PCT/FR2011/050807
(87) Numéro de publication internationale: WO 2011/138531

(56) Documents cités:
- EP-A1- 1 878 621
- DE-C1- 19 813 393
- FR-A1- 2 805 514
- FR-A1- 2 918 030
- US-A- 5 580 109

## Description

La présente invention se rapporte à un ensemble arrière de véhicule, notamment de véhicule automobile.

Elle se rapporte plus particulièrement à un ensemble arrière de véhicule du type comportant :
- des éléments de caisse délimitant une ouverture arrière d'accès au coffre du véhicule et supportant un ouvrant arrière de fermeture de ladite ouverture arrière, lesdits éléments de caisse comportant un panneau arrière définissant une surface de montage située en dessous l'ouverture arrière ;
- un dispositif de pare-chocs arrière comprenant :
   - une poutre transversale arrière fixée sur la surface de montage dudit panneau arrière ;
   - une peau de pare-chocs recouvrant au moins partiellement la poutre transversale ; et
   - un organe de support conçu pour le montage et le support de la peau de pare-chocs sur les éléments de caisse.

Pour la fixation des peaux de pare-chocs sur le panneau arrière, il est connu d'employer de tels organes de support, généralement réalisés en matière plastique. Il est d'usage que ces organes de support soient fixés uniquement sur le panneau arrière, comme décrit notamment dans la demande de brevet FR 2 918 030 A1 ou DE 198 13 393 C1.

Cette fixation unique des organes de support sur le panneau arrière présente l'inconvénient principal suivant : l'organe de support n'offre pas un référentiel robuste et fiable pour le positionnement et la fixation de la peau de pare-chocs sur la caisse du véhicule. En conséquence, ces organes de support permettent difficilement de maîtriser le jeu entre l'ouvrant arrière et le dispositif de pare-chocs, une fois l'ouvrant arrière en position fermée.

Ce problème de maitrise du jeu a plus particulièrement été observé dans les dispositifs de pare-chocs à large porte-à-faux, dans lesquels la peau de pare-chocs est relativement éloignée du panneau arrière, et notamment dans les véhicules automobiles du type break qui comportent de tels dispositifs de pare-chocs.

La présente invention a pour but de résoudre ce problème en proposant un ensemble arrière de véhicule qui permette la maîtrise du jeu entre l'ouvrant arrière et le dispositif de pare-chocs, en particulier dans les dispositifs de pare-chocs à large porte-à-faux.

A cet effet, elle propose un ensemble arrière de véhicule du type comportant :
- des éléments de caisse délimitant une ouverture arrière d'accès au coffre du véhicule et supportant un ouvrant arrière de fermeture de ladite ouverture arrière, lesdits éléments de caisse comportant un panneau arrière définissant une surface de montage située en dessous de l'ouverture arrière ;
- un dispositif de pare-chocs arrière comprenant :
   - une poutre transversale arrière fixée sur la surface de montage dudit panneau arrière ;
   - une peau de pare-chocs recouvrant au moins partiellement la poutre transversale ; et
   - un organe de support conçu pour le montage et le support de la peau de pare-chocs sur les éléments de caisse ;
   ledit ensemble arrière étant remarquable en ce que l'organe de support présente au moins les deux parties transversales suivantes :
- une partie avant fixée sur le panneau arrière avec des premiers moyens de fixation ; et
- une partie arrière fixée sur la poutre transversale avec des seconds moyens de fixation, notamment des moyens de vissage.

Ainsi, l'organe de support est fixée à la fois sur le panneau arrière et sur la poutre transversale du dispositif de pare-chocs, garantissant un bon positionnement et une bonne fixation de cet organe de support, ce qui garantit de fait un bon positionnement et une bonne fixation de la peau de pare-chocs, limitant ainsi les risques de perte de contrôle du jeu entre l'ouvrant arrière et le dispositif de pare-chocs, et ce quelque soit la largeur du porte-à-faux du dispositif de pare-chocs.

Dans un mode de réalisation particulier, les premiers moyens de fixation comportent des pattes de fixation solidaires de la partie avant de l'organe de support et des pièces formant cornières rapportées de manière solidaire sur le panneau arrière et comportant des surfaces de réception sur lesquelles sont fixées lesdites pattes de fixation, notamment par clipsage. Cet emploi de pattes de fixation et de pièces formant cornières est particulièrement avantageux pour réaliser un positionnement de l'organe de support dans la direction transversale du véhicule et un verrouillage de l'organe de support dans la direction longitudinale du véhicule.

Selon une caractéristique, les pattes de fixation font saillie d'une face inférieure de l'organe de support disposée en regard de la poutre transversale, dissimulant ainsi les premiers moyens de fixation pour des raisons esthétiques.

Selon une autre caractéristique, l'organe de support comporte une patte de fixation centrale située dans un plan médian de l'organe de support et au moins deux pattes de fixation périphériques situées de part et d'autre de la patte de fixation centrale. Une telle configuration est avantageuse pour répartir les efforts de fixation et garantir un bon positionnement de l'organe de support sur le panneau arrière.

Dans une réalisation particulière, la partie arrière de l'organe de support est fixée sur une surface arrière sensiblement verticale de la poutre transversale et opposée au panneau arrière, de sorte que la fixation de l'organe de support se fait sur deux surfaces particulièrement espacées l'une de l'autre (surface de montage du panneau arrière et surface arrière de la poutre transversale), assurant ainsi une bonne stabilité de montage de l'organe de support et de la peau de pare-chocs, notamment dans le cas de large porte-à-faux du dispositif de pare-chocs.

Dans une première réalisation, la peau de pare-chocs présente une échancrure dans laquelle est logée une partie centrale transversale de l'organe de support située entre la partie avant et la partie arrière dudit organe de support, de sorte que ladite partie centrale est visible de l'extérieur. Une telle réalisation est particulièrement avantageuse pour limiter la matière la peau de pare-chocs, et donc limiter les coûts de production des peaux de pare-chocs en question. Dans cette première réalisation, il est avantageux que la partie avant présente un bord libre transversal en affleurement avec l'ouverture arrière et recouvrant de préférence les pattes de fixation.

Dans une seconde réalisation, variante de la première réalisation, la peau de pare-chocs recouvre l'organe de support de sorte que ledit organe de support est dissimulé par ladite peau de pare-chocs.

Avantageusement, l'organe de support comporte des moyens élastiques, réalisés notamment sous la forme de lames élastiquement déformables ou lames ressort, lesdits moyens élastiques venant en appui contre une face supérieur horizontale de la poutre transversale et étant conçus pour définir les deux positions suivantes :
- une première position de l'organe de support lorsque l'ouvrant arrière occupe une position ouverte, dans laquelle les moyens élastiques sont au repos ; et
- une deuxième position de l'organe de support lorsque l'ouvrant arrière occupe une position fermée, dans laquelle les moyens élastiques sont déformés.

Ces moyens élastiques permettent de définir une première position dite provisoire de l'organe de support, lorsque l'ouvrant arrière est en position ouverte puis, lors de la fermeture de l'ouvrant arrière, ce dernier peut imposer un déplacement de l'organe de support vers la seconde position dite définitive, ce déplacement étant permis par la déformation des moyens élastiques. Cette seconde position définitive de l'organe de support correspond à une position satisfaisante de l'organe de support par rapport à l'ouvrant, et donc à un jeu contrôlé et satisfaisant entre l'ouvrant arrière et le dispositif de pare-chocs. De la sorte, c'est la fermeture de l'ouvrant arrière qui assure un positionnement automatique de l'organe de support, et donc, par la suite, du jeu entre l'ouvrant arrière et le dispositif de pare-chocs. Avec ces moyens élastiques, on peut assurer un jeu particulièrement faible entre la pièce de carrosserie et l'ouvrant l'ouvrant arrière et le dispositif de pare-chocs, notamment un jeu inférieur à 4 millimètres.

Selon une possibilité de l'invention, les seconds moyens de fixation sont conçus pour la fixation de la partie arrière de l'organe de support sur la poutre transversale lorsque les moyens élastiques sont dans la deuxième position. En effet, une fois la seconde position définitive atteinte et donc une fois le jeu établi entre l'ouvrant arrière et le dispositif de pare-chocs, on peut ensuite fixer définitivement cet organe de support sur la poutre transversale avec les seconds moyens de fixation.

Selon une autre possibilité de l'invention, l'organe de support comporte, sur une paroi supérieure destinée à être juxtaposée à l'ouvrant arrière, des moyens d'espacement selon une direction sensiblement verticale de ladite paroi supérieure et de l'ouvrant arrière lorsque ledit ouvrant arrière est fermée, lesdits moyens d'espacement étant de préférence escamotables notamment en étant du type sécable ou ruptible. Ces moyens d'espacement sont destinés à assurer un jeu minimum entre l'ouvrant arrière et le dispositif de pare-chocs. L'emploi de moyens d'espacement escamotables est particulièrement avantageux lorsque l'on souhaite rapporter la peau de pare-chocs sur l'organe de support, et en particulier sur la paroi supérieure de l'organe de support, de sorte qu'il est nécessaire de détacher ces moyens d'espacement pour que cette paroi supérieure puisse recevoir la peau de pare-chocs.

D'autres caractéristiques et avantages de la présente invention apparaîtront à la lecture de la description détaillée ci-après, d'exemples de mise en oeuvre non limitatifs, faite en référence aux figures annexées dans lesquelles :
- la figure 1 est une vue schématique en perspective d'un ensemble arrière de véhicule automobile conforme à l'invention, avant le montage de l'organe de support et de la peau de pare-chocs ;
- la figure 2 est une vue schématique en perspective de l'ensemble arrière de la figure 1, après montage de l'organe de support ;
- la figure 3 est une vue schématique en perspective de dos de l'organe de support de la figure 2 ;
- la figure 4 est une vue schématique en perspective de l'ensemble arrière des figures 1 et 2, après montage de la peau de pare-chocs selon un premier mode de réalisation ;
- la figure 5 est une vue schématique en perspective de l'ensemble arrière des figures 1 et 2, après montage de la peau de pare-chocs selon un second mode de réalisation ;
- la figure 6 est une vue schématique en coupe transversale d'un ensemble arrière conforme à l'invention, avec l'ouvrant arrière en position fermée et avant le montage de la peau de pare-chocs ;
- la figure 7 est une vue schématique en coupe transversale de l'ensemble arrière de la figure 6, après le montage de la peau de pare-chocs.

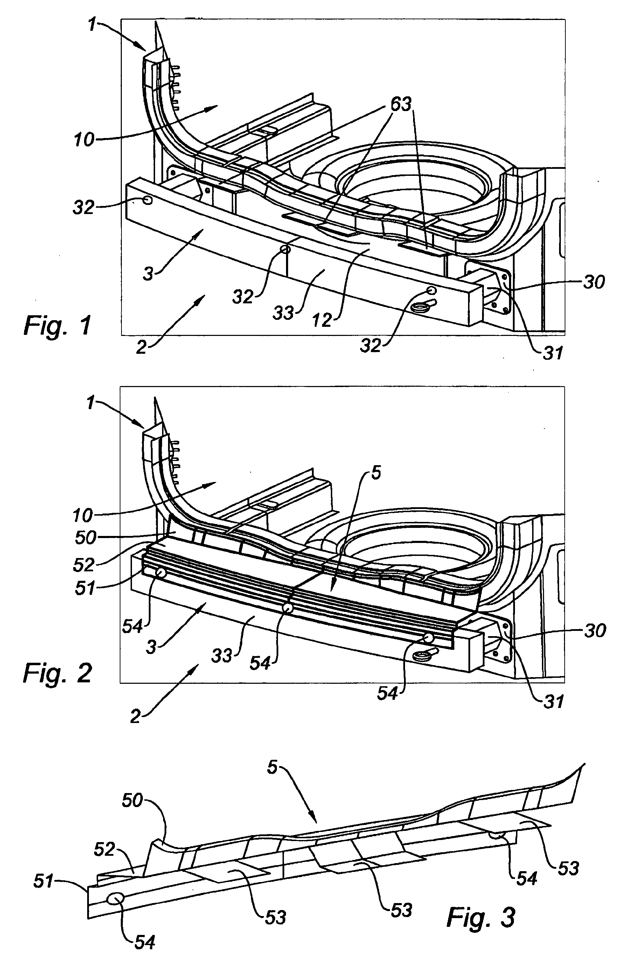

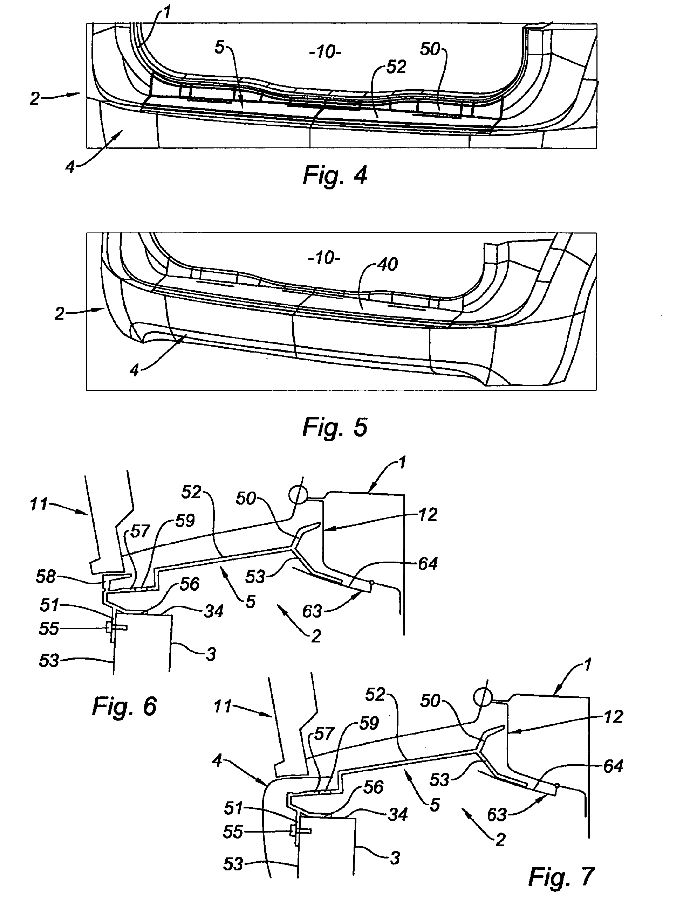

En référence aux figures 1 à 7, un ensemble arrière de véhicule automobile conforme à l'invention comporte :
- des éléments de caisse 1 délimitant une ouverture arrière 10 d'accès au coffre du véhicule et supportant, en partie haute de l'ouverture arrière 10, un ouvrant arrière 11 (visible sur les figures 6 et 7) de fermeture de cette ouverture arrière 10 ; et
- un dispositif de pare-chocs arrière 2.

L'ouvrant arrière 11 est articulée sur les éléments de caisse 1, notamment au moyen de charnières (non illustrées), entre une position d'ouverture et une position de fermeture de l'ouverture arrière 10.

Les éléments de caisse 1 comportent un panneau arrière 12 définissant une surface de montage située en dessous de l'ouverture arrière 10.

Le dispositif de pare-chocs arrière 2 comprend :
- une poutre transversale 3 arrière fixée sur la surface de montage du panneau arrière 12 ;
- une peau de pare-chocs 4, visible sur les figures 4, 5 et 7, recouvrant au moins partiellement la poutre transversale 3; et
- un organe de support 5 conçu pour le montage et le support de la peau de pare-chocs 4 sur les éléments de caisse 1.

La poutre transversale 3 est fixée sur le panneau arrière 12 au moyen de plaques 30 vissées dans le panneau arrière 12, comme visible sur les figures 1 et 2, avec éventuellement interposition d'absorbeur de chocs 31 entre le panneau arrière 12 et la poutre transversale 3.

Des orifices 32 sont ménagés dans la poutre transversale 3, et plus spécifiquement sur une surface arrière 33 sensiblement verticale de la poutre transversale 3 et opposée au panneau arrière 12. Les orifices 32 sont destinés au vissage de l'organe de support 5 sur la poutre transversale 3. Les orifices 32 sont au nombre de trois, avec un orifice central situé dans le plan médian de la poutre transversale 3 et deux orifices périphériques situés de part et d'autre de l'orifice central.

L'organe de support 5 présente les parties transversales suivantes :
- une partie avant 50 sensiblement verticale fixée sur le panneau arrière 12 avec des premiers moyens de fixation ;
- une partie arrière 51 sensiblement verticale fixée sur la poutre transversale 3 avec des seconds moyens de fixation ; et
- une partie centrale 52 sensiblement horizontale située entre la partie avant 50 et la partie arrière 51.

Les premiers moyens de fixation comportent :
- des pattes de fixation 53 (visibles sur les figures 3, 6, et 7) solidaires de la partie avant 50 ; et
- des pièces formant cornières 63 rapportées de manière solidaire sur le panneau arrière 12 et comportant des surfaces de réception 64 sur lesquelles sont fixées les pattes de fixation 53.

Les pattes de fixation 53 font saillie d'une face inférieure de l'organe de support 5 disposée en regard de la poutre transversale 3, comme visible sur les figures 3, 6 et 7. En outre, ces pattes de fixation 53 sont au nombre de trois avec une patte de fixation centrale situé dans un plan médian de l'organe de support 5 et deux pattes de fixation périphériques situées de part et d'autre de la patte de fixation centrale.

Les pièces formant cornières 63, aussi nombreuses que les pattes de fixation 53, sont soudées sur le panneau arrière 12 et permettent un guidage des pattes de fixation 53 selon la direction longitudinale du véhicule. Les pièces formant cornières 63 et les pattes de fixation 53 sont conformées pour permettre une fixation par clipsage des pattes de fixation 53 sur ces pièces formant cornières 63.

La partie arrière 51 de l'organe de support 5 est fixée sur la surface arrière 33 de la poutre transversale 3, à l'opposée au panneau arrière 12.

Les seconds moyens de fixation comportent :
- des orifices 54 ménagés dans la partie arrière 51, ces orifices 54 étant aussi nombreux que les orifices 32 ménagés dans la poutre transversale 3 et venant coïncider avec ces orifices 32 lorsque la partie arrière 51 vient en appui contre la surface arrière 33 de la poutre transversale 3 ; et
- des vis de fixation 55 qui s'engagent dans les orifices 54 et 32 pour visser cette partie arrière 51 sur cette surface arrière 33.

Dans un premier mode de réalisation illustré sur la figure 4, la peau de pare-chocs 4 présente une échancrure dans laquelle est logée la partie centrale 52 de l'organe de support 5 ; cette échancrure étant dimensionnée pour la peau de pare-chocs 4 et logée la partie centrale 52 de l'organe de support 5 soient en affleurement pour des raisons d'esthétique. La partie centrale 52 et la partie avant 50 sont ainsi visibles de l'extérieur une fois la peau de pare-chocs 4 montée sur le véhicule.

Dans un second mode de réalisation illustré sur la figure 5, la peau de pare-chocs 4 recouvre complètement l'organe de support 5 de sorte que cet organe de support 5 est dissimulé par la peau de pare-chocs 4 une fois que cette dernière est montée sur le véhicule. Ainsi, la peau de pare-chocs 4 de ce second mode de réalisation présente une paroi de recouvrement 40 là où se trouvait l'échancrure de la peau de pare-chocs conforme au premier mode de réalisation.

Dans une réalisation spécifique illustrée sur les figures 6 et 7, l'organe de support 5 comporte des lames élastiquement déformables 56, autrement appelées lames ressort, qui viennent en appui contre une face supérieur horizontale 34 de la poutre transversale 3.

Ces lames élastiquement déformables 56 sont conçues pour définir les deux positions suivantes :
- une première position dite provisoire de l'organe de support 5 lorsque l'ouvrant arrière 11 occupe la position ouverte, dans laquelle les lames élastiquement déformables 56 sont au repos ; et
- une deuxième position dite définitive (visible sur les figures 6 et 7) de l'organe de support 5 lorsque l'ouvrant arrière 11 occupe la position fermée, dans laquelle les lames élastiquement déformables 56 sont déformées.

Dans cette réalisation illustrée sur les figures 6 et 7, l'organe de support 5 comporte en outre, sur une paroi supérieure 57 de l'organe de support 5 destinée à être juxtaposée à l'ouvrant arrière 11, des moyens d'espacement 58 selon une direction sensiblement verticale de cette paroi supérieure 57 et de l'ouvrant arrière 11 lorsque cet ouvrant arrière 11 est fermée.

Ces moyens d'espacement 58 sont escamotables notamment en étant du type sécable ou ruptible, de sorte qu'ils peuvent être détachés de l'organe de support 5 une fois l'espacement établie entre cette paroi supérieure 57 et de l'ouvrant arrière 11.

Ainsi, lors du montage, l'ouvrant arrière 11 est amené dans sa position fermée en butée contre ces moyens d'espacement 58 et les lames élastiquement déformables 56 jusqu'à ce que l'organe de support 5 occupe sa deuxième position définitive. Ensuite, la partie arrière 51 de l'organe de support 5 est vissé sur la surface arrière 33 de la poutre transversale lorsque cet organe de support 5 occupe cette deuxième position définitive. Enfin, l'ouvrant arrière 11 est relevé et ramené dans sa position ouverte pour permettre de détacher les moyens d'espacement 58.

Bien entendu l'exemple de mise en oeuvre évoqué ci-dessus ne présente aucun caractère limitatif et d'autres détails et améliorations peuvent être apportés à l'ensemble arrière selon l'invention, sans pour autant sortir du cadre de l'invention où d'autres formes de moyens de fixation peuvent par exemple être réalisées.

## Revendications

1. Ensemble arrière de véhicule du type comportant :
- des éléments de caisse (1) délimitant une ouverture arrière (10) d'accès au coffre du véhicule et supportant un ouvrant arrière (11) de fermeture de ladite ouverture arrière (10), lesdits éléments de caisse (1) comportant un panneau arrière (12) définissant une surface de montage située en dessous de l'ouverture arrière (10) ;
- un dispositif de pare-chocs arrière (2) comprenant :
- une poutre transversale (3) arrière fixée sur la surface de montage dudit panneau arrière (12) ;
- une peau de pare-chocs (4) recouvrant au moins partiellement la poutre transversale (3) ; et
- un organe de support (5) conçu pour le montage et le support de la peau de pare-chocs (4) sur les éléments de caisse (1) ; et l'organe de support (5) présente au moins les deux parties transversales suivantes :
- une partie avant (50) fixée sur le panneau arrière (12) avec des premiers moyens de fixation (53, 63) ; et **caractérisé par**
une partie arrière (51) fixée sur la poutre transversale (3) avec des seconds moyens de fixation (54, 55), notamment des moyens de vissage.

2. Ensemble selon la revendication 1, dans lequel les premiers moyens de fixation comportent des pattes de fixation (53) solidaires de la partie avant (50) de l'organe de support (5), et des pièces formant cornières (63) rapportées de manière solidaire sur le panneau arrière (12) et comportant des surfaces de réception (64) sur lesquelles sont fixées lesdites pattes de fixation (53), notamment par clipsage.

3. Ensemble selon la revendication 2, dans lequel les pattes de fixation (53) font saillie d'une face inférieure de l'organe de support (5) disposée en regard de la poutre transversale (3).

4. Ensemble selon les revendications 2 ou 3, dans lequel l'organe de support (5) comporte une patte de fixation (53) centrale située dans un plan médian de l'organe de support (5) et au moins deux pattes de fixation (53) périphériques situées de part et d'autre de la patte de fixation centrale.

5. Ensemble selon l'une quelconque des revendications 1 à 4, dans lequel la partie arrière (51) de l'organe de support (5) est fixée sur une surface arrière (33) sensiblement verticale de la poutre transversale (3) et opposée au panneau arrière (12).

6. Ensemble selon l'une quelconque des revendications 1 à 5, dans lequel la peau de pare-chocs (4) présente une échancrure dans laquelle est logée une partie centrale (52) transversale de l'organe de support (5) située entre la partie avant (50) et la partie arrière (51) dudit organe de support (5), de sorte que ladite partie centrale (52) est visible de l'extérieur.

7. Ensemble selon l'une quelconque des revendications 1 à 5, dans lequel la peau de pare-chocs (4) recouvre l'organe de support (5) de sorte que ledit organe de support (5) est dissimulé par ladite peau de pare-chocs (4).

8. Ensemble selon l'une quelconque des revendications 1 à 7, dans lequel l'organe de support (5) comporte des moyens élastiques (56), réalisés notamment sous la forme de lames élastiquement déformables ou lames ressort, lesdits moyens élastiques (56) venant en appui contre une face supérieur (34) horizontale de la poutre transversale (3) et étant conçus pour définir les deux positions suivantes :
- une première position de l'organe de support (5) lorsque l'ouvrant arrière (11) occupe une position ouverte, dans laquelle les moyens élastiques (56) sont au repos ; et
- une deuxième position de l'organe de support (5) lorsque l'ouvrant arrière (11) occupe une position fermée, dans laquelle les moyens élastiques (56) sont déformés.

9. Ensemble selon la revendication 8, dans lequel les seconds moyens de fixation (54, 55) sont conçus pour la fixation de la partie arrière (51) de l'organe de support (5) sur la poutre transversale (3) lorsque les moyens élastiques (56) sont dans la deuxième position.

10. Ensemble selon les revendications 8 ou 9, dans lequel l'organe de support (5) comporte, sur une paroi supérieure (57) destinée à être juxtaposée à l'ouvrant arrière (11), des moyens d'espacement (58) selon une direction sensiblement verticale de ladite paroi supérieure (57) et de l'ouvrant arrière (11) lorsque ledit ouvrant arrière (11) est fermée, lesdits moyens d'espacement (58) étant de préférence escamotables notamment en étant du type sécable ou ruptible.

## Patentansprüche

1. Heckseitige Fahrzeugeinheit von der Art, die Folgendes umfasst:
- Karosserieelemente (1), die eine heckseitige Öffnung (10) für den Zugang zum Kofferraum des Fahrzeugs begrenzen und eine Heckklappe (11) zum Verschließen der heckseitigen Öffnung (10) tragen, wobei die Karosserieelemente (1) eine heckseitige Platte (12) umfassen, die eine Montageoberfläche definiert, die sich unterhalb der heckseitigen Öffnung (10) befindet;
- eine heckseitige Stoßfängervorrichtung (2), umfassend:
- einen heckseitigen Querbalken (3), der auf der Montageoberfläche der heckseitigen Platte (12) befestigt ist;
- eine Stoßfängerverkleidung (4), die wenigstens teilweise den Querbalken (3) überdeckt; und
- ein Auflageelement (5), das für die Montage und die Auflage der Stoßfängerverkleidung (4) auf den Karosserieelementen (1) ausgelegt ist; und
wobei das Auflageelement (5) wenigstens die folgenden zwei quer verlaufenden Teile aufweist:
- einen Vorderteil (50), der auf der heckseitigen Platte (12) mit ersten Befestigungsmitteln (53, 63) befestigt ist; und **gekennzeichnet durch**
einen Hinterteil (51), der auf dem Querbalken (3) mit zweiten Befestigungsmitteln (54, 55), insbesondere Verschraubungsmitteln, befestigt ist.

2. Einheit nach Anspruch 1, wobei die ersten Befestigungsmittel Befestigungslaschen (53), die fest mit dem Vorderteil (50) des Auflageelements (5) verbunden sind, und Teile umfassen, die Anschlusswinkel (63) bilden, die fest an die heckseitige Platte (12) angestückt sind und Aufnahmeflächen (64) umfassen, auf denen die Befestigungslaschen (53), insbesondere durch Verrastung, befestigt sind.

3. Einheit nach Anspruch 2, wobei die Befestigungslaschen (53) von einer Unterseite des Auflageelements (5) vorspringen, die gegenüber dem Querbalken (3) angeordnet ist.

4. Einheit nach Anspruch 2 oder 3, wobei das Auflageelement (5) eine mittlere Befestigungslasche (53), die sich in einer Mittelebene des Auflageelements (5) befindet, und wenigstens zwei periphere Befestigungslaschen (53) umfasst, die sich auf jeder Seite der mittleren Befestigungslasche befinden.

5. Einheit nach einem der Ansprüche 1 bis 4, wobei der Hinterteil (51) des Auflageelements (5) auf einer im Wesentlichen vertikalen hinteren Oberfläche (33) des Querbalkens (3) befestigt ist, die der heckseitigen Platte (12) gegenüberliegt.

6. Einheit nach einem der Ansprüche 1 bis 5, wobei die Stoßfängerverkleidung (4) eine Aussparung aufweist, in der ein quer verlaufender Mittelteil (52) des Auflageelements (5) untergebracht ist, der sich zwischen dem Vorderteil (50) und dem Hinterteil (51) des Auflageelements (5) befindet, so dass der Mittelteil (52) von außen sichtbar ist.

7. Einheit nach einem der Ansprüche 1 bis 5, wobei die Stoßfängerverkleidung (4) das Auflageelement (5) überdeckt, so dass das Auflageelement (5) von der Stoßfängerverkleidung (4) verborgen wird.

8. Einheit nach einem der Ansprüche 1 bis 7, wobei das Auflageelement (5) elastische Mittel (56) umfasst, die insbesondere in Form von elastisch verformbaren Lamellen oder Federlamellen ausgeführt sind, wobei die elastischen Mittel (56) gegen eine horizontale Oberseite (34) des Querbalkens (3) drücken und ausgelegt sind, um die folgenden zwei Positionen zu definieren:
- eine erste Position des Auflageelements (5), wenn die Heckklappe (11) eine offene Position einnimmt, in der sich die elastischen Mittel (56) in Ruhestellung befinden; und
- eine zweite Position des Auflageelements (5), wenn die Heckklappe (11) eine geschlossene Position einnimmt, in der die elastischen Mittel (56) verformt sind.

9. Einheit nach Anspruch 8, wobei die zweiten Befestigungsmittel (54, 55) für die Befestigung des Hinterteils (51) des Auflageelements (5) auf dem Querbalken (3) ausgelegt sind, wenn sich die elastischen Mittel (56) in der zweiten Position befinden.

10. Einheit nach Anspruch 8 oder 9, wobei das Auflageelement (5) auf einer oberen Wand (57), die dazu bestimmt ist, an die Heckklappe (11) angelegt zu werden, Beabstandungsmittel (58) gemäß einer im Wesentlichen vertikalen Richtung der oberen Wand (57) und der Heckklappe (11) umfasst, wenn die Heckklappe (11) geschlossen ist, wobei die Beabstandungsmittel (58) vorzugsweise versenkbar sind, insbesondere indem sie von trennbarer oder zerbrechlicher Art sind.

## Claims

1. Vehicle rear assembly of the type comprising:
- bodywork elements (1) delimiting a rear opening (10) for access to the vehicle luggage compartment and supporting a rear door (11) closing said rear opening (10), said bodywork elements (1) comprising a rear panel (12) defining a mounting surface situated below the rear opening (10);
- a rear bumper device (2) comprising:
- a rear transverse beam (3) fixed to the mounting surface of said rear panel (12);
- a bumper skin (4) at least partially covering the transverse beam (3); and
- a support member (5) designed for mounting and supporting the bumper skin (4) on the bodywork elements (1); and
the support member (5) has at least the following two transverse parts:
- a front part (50) fixed to the rear panel (12) with first fixing means (53, 63); and **characterised by**
- a rear part (51) fixed to the transverse beam (3) with second fixing means (54, 55), in particular screwing means.

2. Assembly according to claim 1, wherein the first fixing means comprise fixing lugs (53) secured to the front part (50) of the support member (5), and pieces forming angle members (63) attached integrally to the rear panel (12) and comprising reception surfaces (64) to which said fixing lugs (53) are fixed, in particular by clipping.

3. Assembly according to claim 2, wherein the fixing lugs (53) project from a bottom face of the support member (5) disposed opposite the transverse beam (3).

4. Assembly according to claims 2 or 3, wherein the support member (5) comprises a central fixing lug (53) situated in a mid-plane of the support member (5) and at least two peripheral fixing lugs (53) situated on either side of the central fixing lug.

5. Assembly according to any one of claims 1 to 4, wherein the rear part (51) of the support member (5) is fixed to a substantially vertical rear surface (33) of the transverse beam (3) and opposite to the rear panel (12).

6. Assembly according to any one of claims 1 to 5, wherein the bumper skin (4) has a recess in which there is housed the transverse central part (52) of the support member (5) situated between the front part (50) and the rear part (51) of said support member (5), so that said central part (52) is visible from the outside.

7. Assembly according to any one of claims 1 to 5, wherein the bumper skin (4) covers the support member (5) so that said support member (5) is concealed by said bumper skin (4).

8. Assembly according to any one of claims 1 to 7, wherein the support member (5) comprises elastic means (56), produced in particular in the form of elastically deformable blades or spring blades, said elastic means (56) coming into abutment against a horizontal top face (34) of the transverse beam (3) and being designed to define the following two positions:
- a first position of the support member (5) when the rear door (11) occupies an open position, in which the elastic means (56) are at rest; and
- a second position of the support member (5) when the rear door (11) occupies a closed position, in which the elastic means (56) are deformed.

9. Assembly according to claim 8, wherein the second fixing means (54, 55) are designed for fixing the rear part (51) of the support member (5) to the transverse beam (3) when the elastic means (56) are in the second position.

10. Assembly according to claim 8 or 9, wherein the support member (5) comprises, on a top wall (57) intended to be juxtaposed with the rear door (11), means (58) for spacing said top wall (57) and the rear door (11) in a substantially vertical direction when said rear door (11) is closed, said spacing means (58) preferably being retractable in particular being of the divisible or breakable type.
